# EUROPÄISCHE PATENTSCHRIFT

(11) **EP 2 156 537 B1**
(45) Veröffentlichungstag und Bekanntmachung des Hinweises auf die Patenterteilung: **30.10.2019**
(21) Anmeldenummer: 08735736.4
(22) Anmeldetag: 03.04.2008
(51) Int. Cl.: H02K 5/26, H02K 7/14, H02K 9/14

(54) **ELEKTROMOTOR MIT AUFNAHME**
ELECTRIC MOTOR COMPRISING A RECEIVING ELEMENT
MOTEUR ÉLECTRIQUE À PRISE MOTEUR

(30) Priorität: 25.05.2007 DE 102007024388
(43) Veröffentlichungstag der Anmeldung: 24.02.2010
(73) Patentinhaber: Robert Bosch GmbH, 70442 Stuttgart (DE)
(72) Erfinder: BERNHARDT, Thomas, 72631 Aichtal-Groetzingen (DE); RUEBSAAMEN, Holger, 70188 Stuttgart (DE); SCHLEGEL, Andreas, 70771 Leinfelden-Echterdingen (DE)
(86) Internationale Anmeldenummer: PCT/EP2008/053987
(87) Internationale Veröffentlichungsnummer: WO 2008/145438

(56) Entgegenhaltungen:
- EP-A- 0 192 469
- DE-A1- 10 142 174
- DE-U1-202006 012 489
- FR-A- 2 160 215
- FR-A- 2 470 468
- US-A1- 2002 057 025

## Beschreibung

### Stand der Technik

Die Erfindung geht aus von einer Handwerkzeugmaschine mit einer Motoreinheit, die ein Motorgehäuse umfasst, und einer Aufnahmeeinheit, die zu einer Aufnahme von wenigstens einem Antriebselement vorgesehen ist.

Es ist bereits ein Elektrogerät mit einer Motoreinheit, die ein Motorgehäuse umfasst, bekannt. Zudem umfasst das Elektrogerät eine Aufnahmeeinheit, die zu einer Aufnahme von einem Antriebselement vorgesehen ist, wobei die Motoreinheit direkt an der Aufnahmeeinheit angeordnet ist.

In der EP 0 192 469 A ist eine Handwerkzeugmaschine nach dem Oberbegriff des Anspruchs 1 beschrieben. In der DE 101 42 174 A1 und in der US 2002/0570255 A1 sind zudem Motoreinheiten mit einem Motor und einem Motorgehäuse offenbart.

### Vorteile der Erfindung

Die Erfindung geht aus von einer Handwerkzeugmaschine nach dem Anspruch 1.

Es wird vorgeschlagen, dass die Handwerkzeugmaschine eine Motorhülse aufweist, über die die Motoreinheit mit der Aufnahmeeinheit gekoppelt ist. In diesem Zusammenhang soll unter einer "Aufnahmeeinheit" insbesondere eine Einheit verstanden werden, die zu einer Aufnahme und/oder einer Lagerung von Antriebselementen vorgesehen ist, wie beispielsweise einer Aufnahme einer Motoreinheit, einer Antriebswelle, eines Hammerrohrs und/oder weiterer, dem Fachmann als sinnvoll erscheinender Elemente, welche eine Drehbewegung bzw. ein Antriebsmoment eines Motors umsetzen, und/oder die vorzugsweise von einem Aufnahmeflansch, einem Zwischenflansch, und/oder einem Teilbereich bzw. einem Teilabschnitt eines Gehäuses des Elektrogeräts gebildet ist. Unter "vorgesehen" soll insbesondere speziell ausgestattet und/oder ausgelegt verstanden werden. Vorzugsweise umfasst die Motoreinheit neben dem Motorgehäuse wenigstens einen Motor, insbesondere einen elektrisch betriebenen Motor, und/oder eine Motorwelle, wobei der Motor und/oder die Motorwelle von dem Motorgehäuse zumindest teilweise umgeben sind. Unter einer "Motorhülse" soll hierbei insbesondere eine Hülse verstanden werden, die zu einem Befestigen und/oder einem Koppeln der Motoreinheit an bzw. mit der Aufnahmeeinheit vorgesehen ist, und die zusätzlich zu einem Motorgehäuse den Motor umgibt. Durch die erfindungsgemäße Ausgestaltung kann konstruktiv einfach eine modulare Anordnung, insbesondere der Motoreinheit, innerhalb der Aufnahmeeinheit erreicht werden, die zudem einen besonders vorteilhaften Schutz der Motoreinheit vor unerwünschtem Staub und/oder unerwünschter Feuchtigkeit ermöglicht. Ferner kann eine besonders einfache Montage der Motoreinheit realisiert werden, indem die Motoreinheit zunächst an der Motorhülse angeordnet und dann zusammen mit dieser mit der Aufnahmeeinheit befestigt wird. Eine direkte Lagerung der Motoreinheit mit einem Gehäuse des Elektrogeräts kann damit vorteilhaft vermieden werden. Das Elektrogerät ist vorzugsweise von einem Elektrowerkzeug, insbesondere von einer handgeführten Werkzeugmaschine, gebildet.

Des Weiteren wird vorgeschlagen, dass die Motorhülse zumindest eine Befestigungseinheit aufweist, die zu einer Befestigung der Motoreinheit und/oder der Aufnahmeeinheit vorgesehen ist, wodurch eine besonders vorteilhafte, Platz sparende Befestigung der Motorhülse mit der Motoreinheit und/oder der Aufnahmeeinheit erreicht werden kann. Unter einer "Befestigungseinheit" soll in diesem Zusammenhang insbesondere eine Einheit verstanden werden, die mittels einer besonderen Ausformung und/oder einer Anordnung von besonderen Befestigungsmitteln zu einer Befestigung der Motoreinheit und/oder der Aufnahmeeinheit vorgesehen ist.

Weist die Befestigungseinheit zumindest ein Befestigungsmittel zu einer axialen Sicherung der Motoreinheit auf, kann damit eine in axiale Richtung spielfreie Lagerung der Motoreinheit und insbesondere eine spielfreie Übertragung eines Antriebsmoments von der Motoreinheit auf eine Welle, wie beispielsweise auf eine Zwischenwelle, und/oder weiteren, dem Fachmann als sinnvoll erscheinenden Getriebeelementen und/oder Antriebselementen erreicht werden. Besonders vorteilhaft kann dies erreicht werden, wenn das Befestigungsmittel zu einem werkzeuglosen Befestigen der Motoreinheit an der Motorhülse und/oder einer wieder lösbaren Verbindung zwischen der Motoreinheit und der Motorhülse vorgesehen ist, die ein schnelles und konstruktiv einfaches Auswechseln der Motoreinheit bei einem Defekt ermöglicht, wie dies insbesondere mit einem von einem Rastelement und/oder einem Bajonettverschlusselement gebildeten Befestigungsmittel und/oder weiteren, dem Fachmann als sinnvoll erscheinenden Befestigungsmitteln erreicht werden kann. Unter einer "axialen Richtung" soll hierbei insbesondere eine Richtung verstanden werden, die im Wesentlichen entlang einer Drehachse einer Welle der Motoreinheit verläuft. In diesem Zusammenhang soll unter einem "Bajonettverschlusselement" insbesondere ein Befestigungselement verstanden werden, das mit einem weiteren Befestigungselement mittels einer Kombination einer linearen Einführbewegung und einer anschließenden Drehbewegung bezüglich des weiteren Befestigungselements zu einer Sicherung an bzw. einer Befestigung mit diesem Befestigungselement führt.

Weiterhin wird vorgeschlagen, dass das Motorgehäuse wenigstens ein zum Befestigungselement der Motorhülse korrespondierendes Rastelement und/oder Bajonettverschlusselement aufweist, wodurch ein konstruktiv einfaches Befestigen der Motoreinheit an der Motorhülse erreicht werden kann.

Umfasst die Befestigungseinheit zumindest ein Befestigungsmittel zu einer Sicherung der Motoreinheit in eine Umfangsrichtung, kann damit eine Platz sparende Sicherung in Umfangsrichtung kostengünstig und einfach erreicht werden. Unter einer "Umfangsrichtung" soll dabei eine Richtung der Motoreinheit verstanden werden, die insbesondere um eine Drehachse einer Welle der Motoreinheit verläuft und senkrecht zur Drehachse ausgerichtet ist.

Ein insbesondere konstruktiv einfaches Befestigungsmittel zur Sicherung der Motoreinheit in Umfangsrichtung kann erzielt werden, wenn das Befestigungsmittel von einer axial verlaufenden Rippe gebildet ist.

Weiterhin wird vorgeschlagen, dass die Befestigungseinheit zumindest ein Befestigungsmittel zu einer Befestigung mit der Aufnahmeeinheit aufweist, wodurch eine vorteilhafte Befestigung der Motoreinheit über die Motorhülse an der Aufnahmeeinheit erreicht werden kann. Besonders vorteilhaft ist hierbei das Befestigungsmittel von einem Rastelement gebildet, so dass insbesondere ein werkzeugloses Befestigen erzielt werden kann. Die Befestigungseinheit zur Befestigung der Motorhülse mit der Aufnahmeeinheit und die Befestigungseinheit zur Befestigung der Motorhülse mit der Motoreinheit können zudem einteilig an der Motorhülse ausgebildet sein.

Weist die Aufnahmeeinheit zumindest ein konisch ausgeformtes Formschlusselement zu einer Zentrierung der Motorhülse auf, kann damit eine konstruktiv einfache Aufnahme bzw. Zentrierung der Motoreinheit innerhalb der Aufnahmeeinheit erreicht werden. Vorzugsweise bildet das konisch ausgeformte Formschlusselement einen sich in eine Aufnahmerichtung erstreckenden, sich verjüngenden Aufnahmebereich der Aufnahmeeinheit. Umfasst auch die Motorhülse ein konisch ausgeformtes Formschlusselement, kann ein passgenaues Einführen und eine spielfreie Lagerung der Motoreinheit mit einfachen Mitteln vorteilhaft erreicht werden.

Des Weiteren wird vorgeschlagen, dass die Motorhülse zumindest einen Kühlkanal zu einer Kühlung der Motoreinheit aufweist, wodurch eine insbesondere Platz sparende Anordnung des Kühlkanals erreicht werden kann. Vorzugsweise ist der Kühlkanal zu einem Durchströmen eines Kühlmittels, wie insbesondere Luft, vorgesehen. Der Kühlkanal kann dabei vorteilhafterweise entlang einer Richtung einer Wärmeübertragung zwischen der Motoreinheit und der Motorhülse angeordnet sein und/oder an einer der Motoreinheit abgewandten Seite der Motorhülse, wie beispielsweise bei einer wärmeleitenden Motorhülse.

Es wird ferner vorgeschlagen, dass die Motorhülse eine Wandung mit zumindest einer Lufteinlassöffnung aufweist, wodurch ein Zwischenraum zwischen der Motorhülse und der Motoreinheit vorteilhaft von Luft zwecks einer Kühlung der Motoreinheit durchströmt werden kann.

Weist die Motorhülse einen Aufnahmebereich zu einer Aufnahme einer Motorelektronik auf, können damit weitere Bauteile, Bauraum, Montageaufwand und Kosten zu einer Lagerung der Motoreinheit vorteilhaft eingespart werden. Vorzugsweise ist der Aufnahmebereich zur Aufnahme der Motorelektronik an einer der Motoreinheit abgewandten Seite der Motorhülse angeordnet, so dass einzelne Bauteile der Motorelektronik bei einem Defekt mit besonders geringem Montageaufwand ausgetauscht werden können. Des Weiteren kann eine Kühleineinheit zur Kühlung der Motoreinheit vorteilhaft zu einer Kühlung der Motorelektronik benutzt werden, wie beispielsweise ein unterhalb der Motorelektronik bzw. der Motorhülse verlaufender Kühlkanal. In diesem Zusammenhang soll unter einer "Motorelektronik" insbesondere eine Elektronik verstanden werden, die zu einer Steuerung und/oder Regelung und/oder Einstellung des Motors in einem Betrieb des Elektrogeräts vorgesehen ist.

Ferner wird vorgeschlagen, dass die Motorhülse wenigstens einen Aufnahmebereich aufweist, in dem zumindest teilweise ein Lüfter der Motoreinheit angeordnet ist, wodurch vorteilhaft weitere Bauteile, Bauraum, Montageaufwand und Kosten zu einer Lagerung des Lüfters konstruktiv einfach eingespart werden können. Der Aufnahmebereich zur Aufnahme des Lüfters kann dabei vorteilhafterweise einteilig mit einem Aufnahmebereich der Motorhülse zur Aufnahme des Motors bzw. der Motoreinheit ausgebildet sein.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein von einem Bohrhammer gebildetes Elektrogerät in einer Seitenansicht,
- Fig. 2: einen Teilbereich des Elektrogeräts mit einer Aufnahmeeinheit und einer Motoreinheit in einer perspektivischen Darstellung,
- Fig. 3: einen Teilbereich der Aufnahmeeinheit mit der Motoreinheit in einer Schnittdarstellung,
- Fig. 4: einen Teilbereich der Aufnahmeeinheit mit der Motoreinheit in einer weiteren Schnittdarstellung,
- Fig. 5: eine Motorhülse aus den Figuren 2 bis 4 in einer perspektivischen Darstellung,
- Fig. 6: eine Motoreinheit und eine Aufnahmeeinheit mit einer alternativen Befestigungseinheit in einer schematischen Seitenansicht,
- Fig. 7: eine alternative Motorhülse in einer perspektivischen Darstellung und
- Fig. 8: einen Teilbereich des Elektrogeräts mit einer alternativen Aufnahmeeinheit und einer Motoreinheit in einer perspektivischen Darstellung.

### Beschreibung der Ausführungsbeispiele

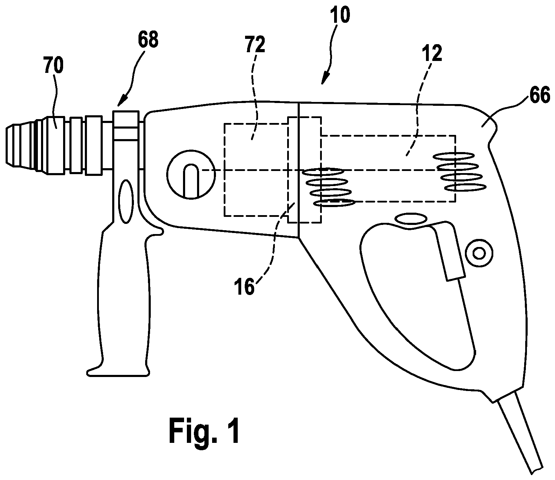

In Figur 1 ist ein Elektrogerät 10 dargestellt, das von einer handgeführten Handwerkzeugmaschine gebildet ist. Die von einem Bohrhammer gebildete Handwerkzeugmaschine umfasst ein Gehäuse 66 und in einem Frontbereich 68 eine Werkzeugaufnahme 70 zu einer Aufnahme eines nicht näher dargestellten Werkzeugs. Zu einer Erzeugung eines Antriebsmoments weist die Handwerkzeugmaschine eine Motoreinheit 12 auf. Zudem umfasst die Handwerkzeugmaschine zu einer Lagerung bzw. Befestigung der Motoreinheit 12 innerhalb der Handwerkzeugmaschine eine Aufnahmeeinheit 16. Das Antriebsmoment der Motoreinheit 12 wird über eine Getriebevorrichtung 72 der Handwerkzeugmaschine auf das Werkzeug übertragen.

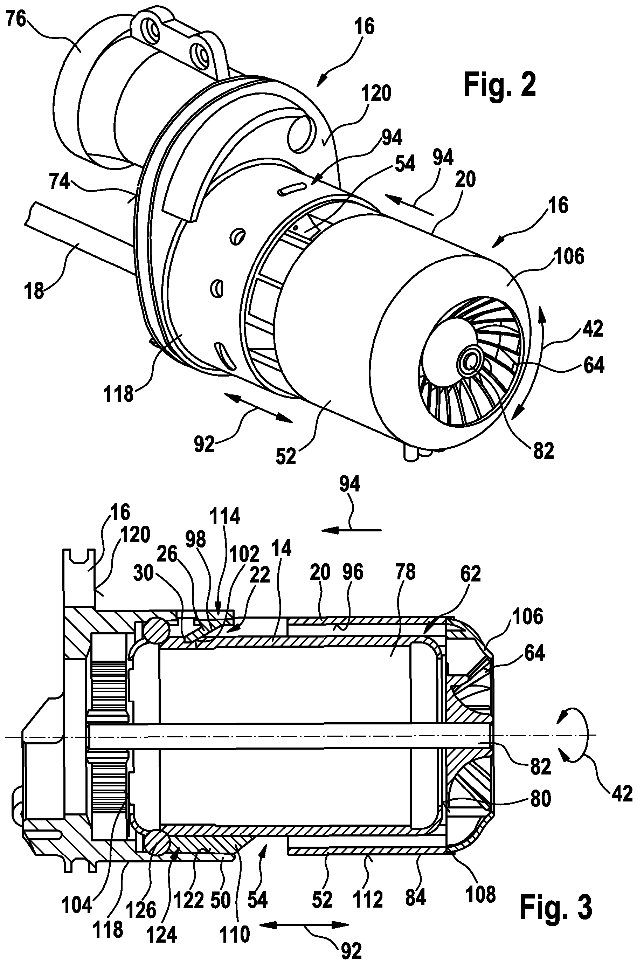

Die Figuren 2 bis 4 zeigen die Aufnahmeeinheit 16 der Handwerkzeugmaschine mit der an der Aufnahmeeinheit 16 montierten Motoreinheit 12. Die Aufnahmeeinheit 16 ist zu einer Aufnahme von Getriebeelementen und/oder Antriebselementen vorgesehen und von einem Zwischenflansch der Handwerkzeugmaschine gebildet. An einer der Motoreinheit 12 abgewandte Seite 74 weist die Aufnahmeeinheit 16 ein hülsenförmiges Aufnahmeelement 76 auf, das zu einer Aufnahme eines von einem Hammerrohr gebildeten Antriebselements und/oder eines von einer Schlagwerksanordnung gebildeten Antriebselements der Handwerkzeugmaschine vorgesehen ist (Figur 2). Des Weiteren ist an der der Motoreinheit 12 abgewandte Seite 74 ein weiteres Antriebselement an dem Zwischenflansch angeordnet. Das weitere Antriebselement ist von einer Antriebswelle 18 gebildet, die ein von der Motoreinheit 12 erzeugtes Antriebsmoment auf weitere, hier nicht näher dargestellte Getriebeelemente im Betrieb der Handwerkzeugmaschine überträgt.

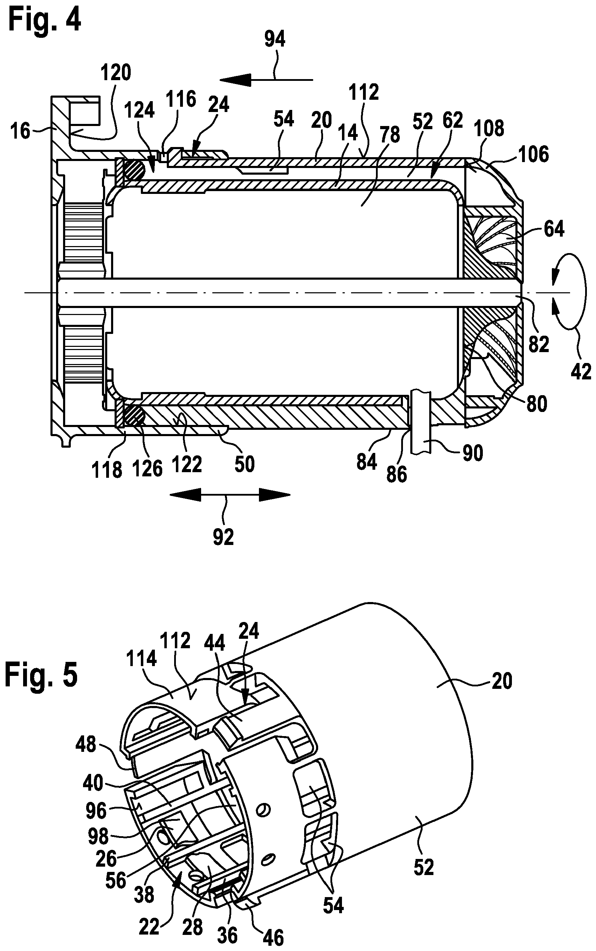

Die Motoreinheit 12 umfasst einen elektrisch betriebenen Motor 78, ein Motorgehäuse 14 und einen Lüfter 64 und ist mittels einer Motorhülse 20 mit der Aufnahmeeinheit 16 gekoppelt (Figuren 2 bis 4). Die Motorhülse 20 ist zylinderförmig ausgebildet und bildet einen Aufnahmebereich 62 für die Motoreinheit 12. In einem montierten Zustand der Motoreinheit 12 mit der Motorhülse 20 umgibt die Motorhülse 20 die Motoreinheit 12 in eine Umfangsrichtung 42. Innerhalb des Aufnahmebereichs 62 der Motorhülse 20 ist an einer der Aufnahmeeinheit 16 abgewandten Seite 80 der Motoreinheit 12 bzw. des Motorgehäuses 14 der Lüfter 64 angeordnet. Der Lüfter 64 wird im Betrieb der Motoreinheit 12 über eine Motorwelle 82 des elektrisch betriebenen Motors 78 angetrieben und ist zu einer Kühlung bzw. einem Schutz des elektrisch betriebenen Motors 78 vor einer unerwünschten Überhitzung vorgesehen. Zudem weist die Motorhülse 20 an einem dem Lüfter 64 zugewandten Teilbereich 84 eine Öffnung 86 innerhalb einer zylinderförmigen Wandung 52 auf, durch die ein Stromkabel 90 zwecks einer Stromversorgung der Motoreinheit 12 geleitet wird (Figuren 2 und 4).

Zu einer Befestigung der Motoreinheit 12 an der Motorhülse 20 weist die Motorhülse 20 eine Befestigungseinheit 22 auf, die an einem der Aufnahmeeinheit 16 zugewandten Teilbereich 114 angeordnet ist und mehrere Befestigungsmittel 26, 28 zu einer Sicherung der Motoreinheit 12 in einer axialen Richtung 92 aufweist (Figuren 3 und 5). Die axiale Richtung 92 verläuft im Wesentlichen parallel zur Motorwelle 82 der Motoreinheit 12 bzw. parallel zu einer Montagerichtung 94 der Motoreinheit 12 bei einer Montage mit der Motorhülse 20. Die Befestigungsmittel 26, 28 sind dabei von jeweils einem Rastelement gebildet, das hakenförmig ausgebildet ist. Die Rastelemente sind dabei in eine Umfangsrichtung 42 der Motorhülse 20 an einer radial nach innen gerichteten Oberfläche 96 zueinander beabstandet angeordnet. Zudem weisen die Rastelemente jeweils eine Rastschräge 98 auf, die schräg gegenüber der zylinderförmigen Wandung 52 der Motorhülse 20 ausgerichtet ist und eine radial nach innen gerichtete Erstreckungskomponente und eine in Montagerichtung 94 gerichtete Erstreckungskomponente aufweisen. Zu einer Befestigung der Motoreinheit 12 weist das Motorgehäuse 14 der Motoreinheit 12 zu den Rastelementen der Motorhülse 20 korrespondierende Rastelemente 30 auf, die jeweils von einer Rastvertiefung gebildet sind, wobei die Rastvertiefungen eine zu den Rastelementen korrespondierende Schrägfläche 102 aufweisen, so dass eine maximale Auflagefläche zwischen den Rastelementen der Motorhülse 20 und dem Rastelement 30 des Motorgehäuses 14 erreicht wird. Die Rastvertiefungen weisen in einer Umfangsrichtung 42 eine Breite auf, die geringfügig breiter ist als eine Breite der hakenartigen Rastelemente der Motorhülse 20, jedoch maximal um 20 % breiter als die Breite der Rastelemente, so dass neben einer Sicherung in die axiale Richtung 92 zugleich eine Sicherung der Motoreinheit 12 in eine Umfangsrichtung 42 erzielt wird. Grundsätzlich ist es jedoch auch denkbar, dass die Rastelemente 30 des Motorgehäuses 14 bzw. die Rastvertiefungen von einer umlaufenden Nut gebildet sind.

Des Weiteren weist die Befestigungseinheit 22 weitere Befestigungsmittel 36, 38, 40 zu einer Sicherung der Motoreinheit 12 in Umfangsrichtung 42 innerhalb der Motorhülse 20 auf. Die Befestigungsmittel 36, 38, 40 sind jeweils von einer in axialer Richtung 92 verlaufenden Rippe gebildet, wobei die Rippen jeweils an der radial nach innen gerichteten Oberfläche 96 der Motorhülse 20 angeordnet sind. Die Rippen erstrecken sich im Wesentlichen über eine gesamte Längserstreckung der Motorhülse 20 (Figur 3). Das Motorgehäuse 14 der Motoreinheit 12 weist hierzu sich in axiale Richtung 92 erstreckende rillenförmige Vertiefungen auf, so dass eine verdrehsichere Lagerung der Motoreinheit 12 innerhalb der Motorhülse 20 erreicht wird. Prinzipiell ist es jedoch jederzeit denkbar, das rippenförmige Befestigungsmittel 36, 38, 40 an dem Motorgehäuse 14 der Motoreinheit 12 und die rillenförmige Vertiefung an der radial nach innen gerichteten Oberfläche 96 der Motorhülse 20 anzuordnen.

In der Montagerichtung 94 sind vor der Befestigungseinheit 22 Lufteinlassöffnungen 54 innerhalb der zylinderförmigen Wandung 52 der Motorhülse 20 eingebracht, durch die eine Luft zu einer Kühlung der Motoreinheit 12 strömen kann. Die Luft wird dabei im Betrieb der Motoreinheit 12 von dem Lüfter 64 angesaugt und strömt entgegen der Montagerichtung 94 entlang Kühlkanäle 56. Die Kühlkanäle 56 sind dabei in Umfangsrichtung 42 von den axial verlaufenden Rippen begrenzt und in einer radialen Richtung von der Motorhülse 20 und der Motoreinheit 12 (Figuren 2 bis 5).

Zu einer Montage der Motoreinheit 12 wird die Motoreinheit 12 mit der dem Lüfter 64 abgewandten Seite 104 in Montagerichtung 94 in die Motorhülse 20 eingeführt, bis die Rastelemente der Motorhülse 20 in die Rastvertiefungen des Motorgehäuses 14 greifen. Die in axiale Richtung 92 verlaufenden Rippen sind dabei zusätzlich zu einer Führung während eines Einführvorgangs der Motoreinheit 12 vorgesehen. Die Rastelemente der Motorhülse 20 und die Rastelemente 30 des Motorgehäuses 14 sichern die Motoreinheit 12 an der Motorhülse 20 gegen eine Bewegung entgegen der Montagerichtung 94. Der Lüfter 64 der Motoreinheit 12 umfasst ein Gehäuse 106, das in einer montierten Position der Motoreinheit 12 an einer der Aufnahmeeinheit 16 abgewandten Seite 108 der Motorhülse 20 anliegt und damit ein zu weites Einführen der Motoreinheit 12 in die Motorhülse 20 verhindert (Figuren 3 und 4).

Zu einer Befestigung der Motorhülse 20 mit der Aufnahmeeinheit 16 weist die Motorhülse 20 eine weitere Befestigungseinheit 24 auf, die von Rastelementen gebildete Befestigungsmittel 44, 46, 48 aufweist (Figuren 4 und 5). Die Rastelemente sind an einer radial nach außen gerichteten Oberfläche 112 der Motorhülse 20 angeordnet und hakenartig ausgebildet. Des Weiteren sind prinzipiell auch alternative Ausbildungen der Befestigungsmittel 44, 46, 48, wie beispielsweise als Bajonettverschlusselement, als Schraubelement und/oder weitere, dem Fachmann als sinnvoll erscheinenden Befestigungsmittel 44, 46, 48, in einer weiteren Ausgestaltung der Erfindung jederzeit denkbar. Die hakenartigen Rastelemente sind an einem der Aufnahmeeinheit 16 zugewandten Teilbereich 114 der Motorhülse 20 angeordnet und greifen zwecks einer Befestigung in dafür vorgesehene Rastausnehmungen 116 der Aufnahmeeinheit 16, so dass die Rastelemente mit einer Umrandung der Rastausnehmungen 116 eine form- und kraftschlüssige Verbindung eingehen. Die Rastausnehmungen 116 sind an einer Aufnahmehülse 118 der Aufnahmeeinheit 16 angeordnet, wobei sich die Aufnahmehülse 118 entlang der axialen Richtung 92 an der der Motoreinheit 12 zugewandten Seite 120 der Aufnahmeeinheit 16 erstreckt. Zwecks einer Sicherung der Motorhülse 20 zusammen mit der Motoreinheit 12 in der Umfangsrichtung 42 sind die Rastausnehmungen 116 der Aufnahmeeinheit 16 geringfügig breiter als die Rastelemente der Motorhülse 20, jedoch um maximal 20 % breiter als die Rastelemente.

Weiterhin weist die Aufnahmeeinheit 16 an einer radial nach innen gerichteten Oberfläche 122 der Aufnahmehülse 118 ein konisch ausgeformtes Formschlusselement 50 auf, so dass die Aufnahmehülse 118 einen sich verjüngenden Aufnahmebereich 124 zur Aufnahme der Motorhülse 20 zusammen mit der Motoreinheit 12 bildet (Figuren 2 und 3). Der verjüngte Aufnahmebereich 124 ermöglicht bei einer Montage der Motorhülse 20 eine einfache Zentrierung und eine große Auflagefläche mit der Motorhülse 20, die hierzu ein zu dem verjüngten Aufnahmebereich 124 korrespondierendes, sich in Montagerichtung 94 verjüngendes Formschlusselements 110 aufweist. Zu einer Befestigung der Motorhülse 20 zusammen mit der Motoreinheit 12 an der Aufnahmeeinheit 16 befindet sich in Umfangsrichtung 42 um die Motoreinheit 12 an einer der Aufnahmeeinheit 16 zugewandten Seite 104 ein O-Ring 126, der für eine passgenaue und spielfreie Befestigung der Motorhülse 20 bzw. der Motoreinheit 12 an der Aufnahmeeinheit 16 vorgesehen ist und zu einer Vorspannung zwischen der Aufnahmeeinheit 16 und der Motoreinheit 12 zusammen mit der Motorhülse 20 in einem montierten Zustand führt. Die Motoreinheit 12 ist in einem montierten Zustand ausschließlich mittels der Motorhülse 20 bzw. dem Formschlusselement und den Befestigungseinheiten 22, 24 an der Aufnahmeeinheit 16 gelagert und ein der Aufnahmeeinheit 16 abgewandter Bereich der Motoreinheit 12 ist frei schwebend innerhalb der Handwerkzeugmaschine angeordnet. Anstatt des O-Rings 126 zu einer passgenauen und spielfreien Befestigung des Motorhülse 20 bzw. der Motoreinheit 12 an der Aufnahmeeinheit 16 ist in einer weiteren Ausgestaltung der Erfindung ein elastisches Formelement und/oder weitere, dem Fachmann als sinnvoll erscheinende Elemente bzw. Bauteile jederzeit denkbar.

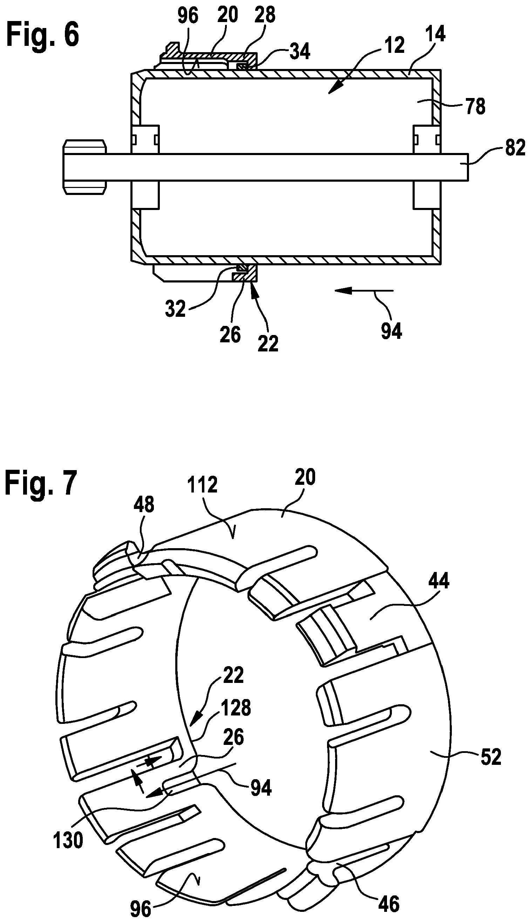

In den Figuren 6 bis 8 sind alternative Ausführungsbeispiele dargestellt. Im Wesentlichen sind gleich bleibende Bauteile, Merkmale und Funktionen grundsätzlich mit den gleichen Bezugszeichen beziffert. Die nachfolgende Beschreibung beschränkt sich im Wesentlichen auf die Unterschiede zu dem Ausführungsbeispiel in den Figuren 1 bis 5, wobei bezüglich gleich bleibender Bauteile, Merkmale und Funktionen auf die Beschreibung des Ausführungsbeispiels in den Figuren 1 bis 5 verwiesen werden kann.

In der Figur 6 ist eine Motoreinheit 12 einer Handwerkzeugmaschine zusammen mit einer Motorhülse 20 dargestellt, wobei die Motorhülse 20 in Montagerichtung 94 einen einer Aufnahmeeinheit 16 zugewandten Teilbereich der Motoreinheit 12 überdeckt. Zu einer Befestigung der Motoreinheit 12 mit der Motorhülse 20 weist die Motorhülse 20 eine Befestigungseinheit 22 auf, die von Bajonettverschlusselementen gebildete Befestigungsmittel 26, 28 aufweist (Figuren 6 und 7). Die Bajonettverschlusselemente bilden jeweils einen Führungskanal an einer radial nach innen gerichteten Oberfläche 96 der Motorhülse 20 für ein von einem Bajonettverschlusselement 32, 34 gebildeten, fortsatzartigen Befestigungsmittel der Motoreinheit 12. Der Führungskanal ist zu einem Einführen des fortsatzartigen Befestigungsmittels in Montagerichtung 94 ausgerichtet und ändert nach einem Einführbereich 130 seinen Verlauf um ca. 90° und erstreckt sich dann im Wesentlichen quer zur Montagerichtung 94, so dass eine Drehbewegung der Motoreinheit 12 gegenüber der Motorhülse 20 ermöglicht wird. Zu einem Erreichen einer Sicherungsposition des fortsatzartigen Befestigungsmittels ändert der Führungskanal nochmals seinen Verlauf um ca. 90° und verläuft anschließend entgegen der Montagerichtung 94 bzw. parallel zu dem Einführbereich 130, wobei der Führungskanal in eine radiale Richtung durch eine zylinderförmige Wandung 52 der Motorhülse 20 und entgegen der Montagerichtung 94 durch einen Anschlag 128 der Motorhülse 20 begrenzt ist.

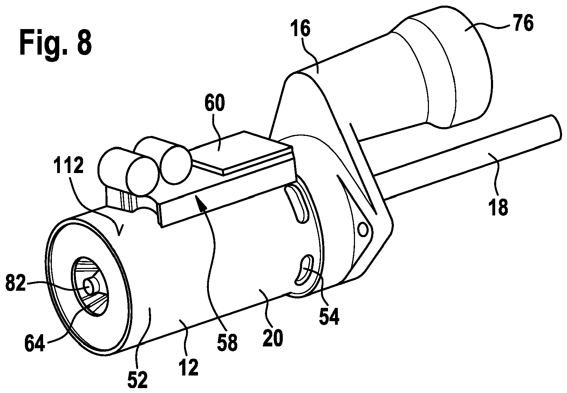

In Figur 8 ist ein Teilbereich einer Handwerkzeugmaschine dargestellt mit einer Aufnahmeeinheit 16, einer Motoreinheit 12 und einer Motorhülse 20. Die Motorhülse 20 weist einen zusätzlichen Aufnahmebereich 58 zu einer Aufnahme einer Motorelektronik 60 auf. Der Aufnahmebereich 58 ist an einer radial nach außen gerichteten Oberfläche 112 einer zylinderförmigen Wandung 52 der Motorhülse 20 angeordnet, so dass die Motorelektronik 60 durch Kühlkanäle 56, die zwischen der Motorhülse 20 und der Motoreinheit 12 verlaufen, eine vorteilhafte Kühlung erhält.

## Patentansprüche

1. Handwerkzeugmaschine mit einem Gehäuse (66), mit einer Motoreinheit (12), die ein Motorgehäuse (14), wenigstens einen Motor (78) und eine Motorwelle umfasst, wobei der Motor (78) und die Motorwelle von dem Motorgehäuse (14) zumindest teilweise umgeben sind, mit einer Aufnahmeeinheit (16) zu einer Lagerung bzw. Befestigung der Motoreinheit (12) innerhalb der Handwerkzeugmaschine, wobei die Aufnahmeeinheit (16) zu einer Aufnahme von wenigstens einem Antriebselement vorgesehen und als ein Zwischenflansch ausgebildet ist, der innerhalb der Handwerkzeugmaschine angeordnet ist, und mit einer Motorhülse (20), über die die Motoreinheit (12) mit der Aufnahmeeinheit (16) gekoppelt ist, wobei die Motorhülse (20) zusätzlich zum Motorgehäuse (14) den Motor (78) umgibt, wobei die Motorhülse (20) die Motoreinheit (12) in einem montierten Zustand der Motoreinheit (12) mit der Motorhülse (20) in eine Umfangsrichtung (42) umgibt, wobei die Motorhülse (20) zumindest eine Befestigungseinheit (22, 24) aufweist, die zu einer Befestigung der Motoreinheit (12) und/oder der Aufnahmeeinheit (16) vorgesehen ist, wobei die Motoreinheit (12) über die Motorhülse (20) an der Aufnahmeeinheit (16) befestigt ist.

2. Handwerkzeugmaschine nach Anspruch 1, **dadurch gekennzeichnet, dass** die Befestigungseinheit (22) zumindest ein Befestigungsmittel (26, 28) zu einer axialen Sicherung der Motoreinheit (12) aufweist.

3. Handwerkzeugmaschine nach Anspruch 2, **dadurch gekennzeichnet, dass** das Befestigungsmittel (26, 28) von einem Rastelement gebildet ist.

4. Handwerkzeugmaschine nach einem der Ansprüchen 2 bis 3 **dadurch gekennzeichnet, dass** das Befestigungsmittel (26, 28) von einem Bajonettverschlusselement gebildet ist.

5. Handwerkzeugmaschine nach Anspruch 3 oder 4, **dadurch gekennzeichnet, dass** das Motorgehäuse (14) wenigstens ein zum Befestigungsmittel (26, 28) der Motorhülse (20) korrespondierendes Rastelement (30) und/oder Bajonettverschlusselement (32, 34) aufweist.

6. Handwerkzeugmaschine nach einem der vorhergehenden Ansprüche, **dadurch gekennzeichnet, dass** die Befestigungseinheit (22) zumindest ein Befestigungsmittel (36, 38, 40) zu einer Sicherung der Motoreinheit (12) in eine Umfangsrichtung (42) aufweist.

7. Handwerkzeugmaschine nach Anspruch 6, **dadurch gekennzeichnet, dass** das Befestigungsmittel (36, 38, 40) von einer axial verlaufenden Rippe gebildet ist.

8. Handwerkzeugmaschine nach einem der vorhergehenden Ansprüche, **dadurch gekennzeichnet, dass** die Befestigungseinheit (24) zumindest ein Befestigungsmittel (44, 46, 48) zu einer Befestigung mit der Aufnahmeeinheit (16) aufweist.

9. Handwerkzeugmaschine nach Anspruch 8, **dadurch gekennzeichnet, dass** das Befestigungsmittel (44, 46, 48) von einem Rastelement gebildet ist.

10. Handwerkzeugmaschine nach einem der vorhergehenden Ansprüche, **dadurch gekennzeichnet, dass** die Aufnahmeeinheit (16) zumindest ein konisch ausgeformtes Formschlusselement (50) zu einer Zentrierung der Motorhülse (20) aufweist.

11. Handwerkzeugmaschine nach einem der vorhergehenden Ansprüche, **dadurch gekennzeichnet, dass** die Motorhülse (20) zumindest einen Kühlkanal (56) aufweist zu einer Kühlung der Motoreinheit (12).

12. Handwerkzeugmaschine nach einem der vorhergehenden Ansprüche, **dadurch gekennzeichnet, dass** die Motorhülse (20) eine Wandung (52) mit zumindest einer Lufteinlassöffnung (54) aufweist.

13. Handwerkzeugmaschine nach einem der vorhergehenden Ansprüche, **dadurch gekennzeichnet, dass** die Motorhülse (20) einen Aufnahmebereich (58) zu einer Aufnahme einer Motorelektronik (60) aufweist.

14. Handwerkzeugmaschine nach einem der vorhergehenden Ansprüche, **dadurch gekennzeichnet, dass** die Motorhülse (20) wenigstens einen Aufnahmebereich (62) aufweist, in dem zumindest teilweise ein Lüfter (64) der Motoreinheit (12) angeordnet ist.

15. Handwerkzeugmaschine nach einem der vorhergehenden Ansprüche, **dadurch gekennzeichnet, dass** die Motoreinheit (12) in einem montierten Zustand ausschließlich mittels der Motorhülse (20) an der Aufnahmeeinheit (16) gelagert ist und ein der Aufnahmeeinheit (16) abgewandter Bereich der Motoreinheit (12) frei schwebend innerhalb der Handwerkzeugmaschine angeordnet ist.

## Claims

1. Portable power tool having a housing (66), having a motor unit (12), which comprises a motor housing (14), at least one motor (78) and a motor shaft, wherein the motor (78) and the motor shaft are surrounded at least partially by the motor housing (14), having a receiving unit (16) for mounting and fastening the motor unit (12) within the portable power tool, wherein the receiving unit (16) is intended to receive at least one drive element and is in the form of an intermediate flange that is arranged within the portable power tool, and having a motor sleeve (20), via which the motor unit (12) is coupled to the receiving unit (16), wherein the motor sleeve (20), in addition to the motor housing (14), surrounds the motor (78), wherein the motor sleeve (20) surrounds the motor unit (12) in a circumferential direction (42) in an assembled state of the motor unit (12) with the motor sleeve (20), wherein the motor sleeve (20) has at least one fastening unit (22, 24), which is intended for fastening the motor unit (12) and/or the receiving unit (16), wherein the motor unit (12) is fastened to the receiving unit (16) via the motor sleeve (20) .

2. Portable power tool according to Claim 1, **characterized in that** the fastening unit (22) has at least one fastening means (26, 28) for axially securing the motor unit (12).

3. Portable power tool according to Claim 2, **characterized in that** the fastening means (26, 28) is formed by a latching element.

4. Portable power tool according to either of Claims 2 and 3, **characterized in that** the fastening means (26, 28) is formed by a bayonet catch element.

5. Portable power tool according to Claim 3 or 4, **characterized in that** the motor housing (14) has at least one latching element (30) and/or bayonet catch element (32, 34) corresponding to the fastening means (26, 28) of the motor sleeve (20).

6. Portable power tool according to one of the preceding claims, **characterized in that** the fastening unit (22) has at least one fastening means (36, 38, 40) for securing the motor unit (12) in a circumferential direction (42).

7. Portable power tool according to Claim 6, **characterized in that** the fastening means (36, 38, 40) is formed by an axially extending rib.

8. Portable power tool according to one of the preceding claims, **characterized in that** the fastening unit (24) has at least one fastening means (44, 46, 48) for fastening to the receiving unit (16) .

9. Portable power tool according to Claim 8, **characterized in that** the fastening means (44, 46, 48) is formed by a latching element.

10. Portable power tool according to one of the preceding claims, **characterized in that** the receiving unit (16) has at least one conically shaped form-fitting element (50) for centring the motor sleeve (20).

11. Portable power tool according to one of the preceding claims, **characterized in that** the motor sleeve (20) has at least one coolant duct (56) for cooling the motor unit (12).

12. Portable power tool according to one of the preceding claims, **characterized in that** the motor sleeve (20) has a wall (52) with at least one air-inlet opening (54).

13. Portable power tool according to one of the preceding claims, **characterized in that** the motor sleeve (20) has a receiving region (58) for receiving motor electronics (60).

14. Portable power tool according to one of the preceding claims, **characterized in that** the motor sleeve (20) has at least one receiving region (62) in which a fan (64) of the motor unit (12) is at least partially arranged.

15. Portable power tool according to one of the preceding claims, **characterized in that**, in an assembled state, the motor unit (12) is mounted on the receiving unit (16) only by means of the motor sleeve (20) and region of the motor unit (12) that faces away from the receiving unit (16) is arranged in a freely floating manner within the portable power tool.

## Revendications

1. Machine-outil portative avec un boîtier (66), avec une unité de moteur (12), qui comprend un boîtier de moteur (14), au moins un moteur (78) et un arbre de moteur, dans laquelle le moteur (78) et l'arbre de moteur sont entourés au moins partiellement par le boîtier de moteur (14), avec une unité de logement (16) pour un support ou une fixation de l'unité de moteur (12) à l'intérieur de la machine-outil portative, dans laquelle l'unité de logement (16) est prévue pour un logement d'au moins un élément d'entraînement et est réalisée sous la forme d'une bride intermédiaire, qui est disposée à l'intérieur de la machine-outil portative, et avec une douille de moteur (20), par laquelle l'unité de moteur (12) est couplée à l'unité de logement (16), dans laquelle la douille de moteur (20) entoure en plus du boîtier de moteur (14) le moteur (78), dans laquelle la douille de moteur (20) entoure dans une direction périphérique (42) l'unité de moteur (12) dans un état monté de l'unité de moteur (12) avec la douille de moteur (20), dans laquelle la douille de moteur (20) présente au moins une unité de fixation (22, 24), qui est prévue pour une fixation de l'unité de moteur (12) et/ou de l'unité de logement (16), dans laquelle l'unité de moteur (12) est fixée à l'unité de logement (16) au moyen de la douille de moteur (20).

2. Machine-outil portative selon la revendication 1, **caractérisée en ce que** l'unité de fixation (22) présente au moins un moyen de fixation (26, 28) pour un blocage axial de l'unité de moteur (12).

3. Machine-outil portative selon la revendication 2, **caractérisée en ce que** le moyen de fixation (26, 28) est formé par un élément d'encliquetage.

4. Machine-outil portative selon une des revendications 2 et 3, **caractérisée en ce que** le moyen de fixation (26, 28) est formé par un élément de verrouillage à baïonnette.

5. Machine-outil portative selon une revendication 3 ou 4, **caractérisée en ce que** le boîtier de moteur (14) présente au moins un élément d'encliquetage (30) et/ou un élément de verrouillage à baïonnette (32, 34) correspondant à l'élément de fixation (26, 28) de la douille de moteur (20).

6. Machine-outil portative selon l'une quelconque des revendications précédentes, **caractérisée en ce que** l'unité de fixation (22) présente au moins un moyen de fixation (36, 38, 40) pour un blocage de l'unité de moteur (12) dans une direction périphérique (42).

7. Machine-outil portative selon la revendication 6, **caractérisée en ce que** le moyen de fixation (36, 38, 40) est formé par une nervure s'étendant axialement.

8. Machine-outil portative selon l'une quelconque des revendications précédentes, **caractérisée en ce que** l'unité de fixation (24) présente au moins un moyen de fixation (44, 46, 48) pour une fixation avec l'unité de logement (16).

9. Machine-outil portative selon la revendication 8, **caractérisée en ce que** le moyen de fixation (44, 46, 48) est formé par un élément d'encliquetage.

10. Machine-outil portative selon l'une quelconque des revendications précédentes, **caractérisée en ce que** l'unité de logement (16) présente au moins un élément d'emboîtement de forme conique (50) pour un centrage de la douille de moteur (20).

11. Machine-outil portative selon l'une quelconque des revendications précédentes, **caractérisée en ce que** la douille de moteur (20) présente au moins un canal de refroidissement (56) pour un refroidissement de l'unité de moteur (12).

12. Machine-outil portative selon l'une quelconque des revendications précédentes, **caractérisée en ce que** la douille de moteur (20) présente une paroi (52) avec au moins une ouverture d'entrée d'air (54).

13. Machine-outil portative selon l'une quelconque des revendications précédentes, **caractérisée en ce que** la douille de moteur (20) présente une région de logement (58) pour un logement d'une électronique de moteur (60).

14. Machine-outil portative selon l'une quelconque des revendications précédentes, **caractérisée en ce que** la douille de moteur (20) présente au moins une région de logement (62), dans laquelle est disposé au moins partiellement un ventilateur (64) de l'unité de moteur (12) .

15. Machine-outil portative selon l'une quelconque des revendications précédentes, **caractérisée en ce que** l'unité de moteur (12) dans un état monté est supportée sur l'unité de logement (16) exclusivement au moyen de la douille de moteur (20) et une région de l'unité de moteur (12) détournée de l'unité de logement (16) est disposée de façon librement flottante à l'intérieur de la machine-outil portative.
